# EUROPÄISCHE PATENTSCHRIFT

(11) **EP 0 836 379 B1**
(45) Veröffentlichungstag und Bekanntmachung des Hinweises auf die Patenterteilung: **13.01.1999**
(21) Anmeldenummer: 96923953.2
(22) Anmeldetag: 27.06.1996
(51) Int. Cl.: A01J 5/017, B25J 19/02, A01J 7/02

(54) **VERFAHREN ZUM ORTEN EINES OBJEKTES**
PROCESS FOR LOCATING AN OBJECT
PROCEDE DE LOCALISATION D'UN OBJET

(30) Priorität: 03.07.1995 DE 19523676
(43) Veröffentlichungstag der Anmeldung: 22.04.1998
(73) Patentinhaber: Westfalia Landtechnik GmbH, 59302 Oelde (DE)
(72) Erfinder: KIMM, Kurt, D-27367 Reessum-Taaken (DE)
(74) Vertreter: Eisenführ, Speiser & Partner
(86) Internationale Anmeldenummer: EP9602808
(87) Internationale Veröffentlichungsnummer: WO9701954

(56) Entgegenhaltungen:
- EP-A- 0 213 660
- EP-A- 0 455 305
- EP-A- 0 576 086
- DE-A- 3 938 077
- LANDTECHNIK, Bd. 45, Nr. 12, Dezember 1990, LEHRTE (DE), Seiten 437-440, XP000164915 ARTMANN & SCHILLINGMANN: "Entwicklungsstand von Melkrobotern"

## Beschreibung

Die Erfindung betrifft ein Verfahren zum Orten eines Objektes, insbesondere einer Zitze einer Kuh, innerhalb eines Arbeitsbereiches mittels einer Sensormatrix eines Melkroboters.

Im Zusammenhang mit Manipuliergeräten und Robotern stellt sich immer wieder das Problem der Sensorik, da Sensoren die notwendige Voraussetzung für das Orten, Erkennen oder Greifen vonn Objekten durch einen Roboter oder einen Manipulatorarm sind. Üblicherweise werden eine große Vielzahl von verschiedenen Sensoren eingesetzt: So finden z.B. Ultraschallsensoren, elektronische Kameras, Laser- oder Radarsensoren ihre Verwendung. Auch Lichtschranken werden zum Orten von Objekten eingesetzt und arbeiten besonders dann effektiv, wenn mehrere Lichtschranken in einer Lichtschrankenmatrix zusammenwirken. Es können aber auch andere Sensoren zu einer Matrix zusammengefaßt werden. Vgl. z.B die Druckschrift DE-A-39 38 077

Die Lage eines Objektes innerhalb einer Lichtschrankenmatrix kann relativ leicht dadurch bestimmt werden, daß überprüft wird, welche der einzelnen Lichtschranken bzw. Lichtstrahlen der Lichtschrankenmatrix von dem Objekt unterbrochen werden. Hierbei kann es aber auch zu Fehlmessungen kommen, wenn eine oder mehrere Lichtschranken nicht von dem zu ortenden Objekt selbst unterbrochen werden, sondern beispielsweise von Schmutz. Der Schmutz kann bei einer Lichtschranke beispielsweise auf deren Lichtempfänger oder Lichtquelle kleben. In beiden Fällen ist die Lichtschranke ständig unterbrochen.

Der Arbeitsbereich der Sensormatrix eines Melkroboters ist üblicherweise im engeren die Umgebung der Zitzen einer Kuh und im weiteren eine Melkbox, in der die Kuh gemolken werden soll. Die Sensormatrix befindet sich meist am Ende eines Roboter- oder Manipulatorarmes in der Nähe einer Haltevorichtung für Zitzenbecher. Die Sensormatrix wird daher in der Regel mit dem Roboter- oder Manipulatorarm mitbewegt.

Es ist die der Erfindung zugrunde liegende Aufgabe, ein Verfahren anzugeben, bei dem Fehlmessungen aufgrund einer ganz oder teilweise verschmutzten Sensormatrix vermieden werden.

Erfindungsgemäß besteht die Lösung dieser Aufgabe in einem Verfahren der eingangs genannten Art, bei dem das mit Hilfe der Sensormatrix gewonnene Ortungsergebnis auf seine Plausibilität hin überprüft wird und im Falle eines nicht plausiblen Ortungsergebnisses ein separater Diagnoseschritt durchgeführt wird. Für diese Prüfung der Plausibilität sind mehrere Varianten denkbar: Wenn es beispielsweise gilt, ein geschlossenes Objekt zu orten, wie dies z.B. die Zitze einer Kuh darstellt, dürfen nur benachbarte Sensoren einer Sensormatrix gleichzeitig abgedunkelt bzw. unterbrochen oder aktiviert sein. Jedes andere Meßergebnis ließe sich nur mit einem Loch in dem zu ortenden Objekt erklären, welches dieses Objekt aber gerade nicht hat: Ein anderes Meßergebnis als eines, bei dem nur benachbarte Sensoren aktiviert oder benachbarte Lichtschranken unterbrochen sind, ist also nicht plausibel. Oft befinden sich Sensormatrizen am Ende eines Roboter- oder Manipulatorarmes. In einem solche Fall kann die Sensormatrix während des Ortens mit der Folge hin- und herbewegt werden, daß sich das Objekt regelmäßig außerhalb der Sensormatrix befindet. Dabei dürfen einzelne Sensoren regelmäßig nicht aktiviert oder der Strahlengang der Lichtschranken nicht unterbrochen sein. Ist dies dennoch der Fall, handelt es sich auch hierbei um ein nicht plausibles Meßergebnis. Werden solche Plausibilitätsprüfungen regelmäßig auch während des Ortungsvorganges durchgeführt, können Fehlmessungen, die beispielsweise auf eine teilweise verschmutzte Lichtschrankenmatrix zurückzuführen sind, erkannt werden und von der weiteren Auswertung ausgenommen werden.

Nach dem ein nichtplausibles Meßergebnis aufgetreten ist, wird erfindungsgemäß ein separater Diagnoseschritt durchgeführt. Dieser kann beispielsweise in einem einfachen Selbsttest einer Sensoreinheit, deren Bestandsteil die Sensormatrix ist, und/oder eines Steuerrechners für die Sensoreinheit bestehen. Falls sich die Sensormatrix an einem bewegbaren Roboter- oder Manipulatorarm befindet, kann sie im Rahmen des Diagnoseschrittes z.B. auch gezielt bewegt werden, um einzelne Sensoren oder die gesamte Sensormatrix so weit von dem zu ortenden Objekt zu entfernen, daß einzelne oder alle Sensoren von dem Objekt nicht mehr aktiviert sein können. Während des separaten Diagnose-Schrittes kann somit beispielsweise festgestellt werden werden, ob das nicht-plausible Meßergebnis wahrscheinlich von verschmutzten Sensoren herrührt und welche Sensoren verschmutzt sind.

Der separate Diagnoseschritt wird vorteilhafterweise an einem Ort abseits des Arbeitsbereiches durchgeführt. Das einzig plausible Meßergebnis während eines solchen Diagnoseschrittes im freien Raum kann im Falle einer Lichtschrankenmatrix nur jenes sein, bei dem bei keiner der Lichtschranken der Matrix eine Unterbrechung festgestellt wird. Wird eine solche Unterbrechung doch festgestellt, ist dies ein deutlicher Hinweis auf eine verschmutzte Lichtschrankenmatrix, wie sie gerade in der Umgebung von Tieren leicht vorkommen kann. Indem der separate Diagnoseschritt beim Orten von z.B. Zitzen einer Kuh abseits des Arbeitsbereiches, also z.B. außerhalb einer Melkbox durchgeführt wird, kann wirkungsvoll vermieden werden, daß die Kuh während des Diagnoseschrittes auf die Sensormatrix einwirkt, indem sie die Sensormatrix beispielsweise abdeckt, (weiter) verschmutzt oder beschädigt.

In einer konsequenten Weiterführung des Verfahrens wird nach dem Ermitteln eines nicht plausiblen Meßergebnisses ein Sensorreinigungsschritt ausgelöst. Der Sensorreinigungsschritt kann darin bestehen, daß die Sensormatrix zu einem Reinigungsmittel wie beispielsweise einer Bürste oder einem Schwamm bewegt und an dem Reinigungsmittel so lange gerieben wird, bis anzunehmen ist, daß die Sensormatrix von störendem Schmutz befreit ist. Alternativ kann ein solches Reinigungsmittel zu der Sensormatrix hinbewegt und dann eingesetzt werden. Eine weitere Variante besteht darin, daß das Reinigungsmittel z.B. in der Nähe der Sensormatrix an einem die Sensoreinheit tragenden Manipulatorarm angebracht ist, so daß sie zum Reinigen der Sensormatrix nur aktiviert werden muß.

Eine Ausführungsform einer Lichtschrankenmatrix soll im Folgenden anhand der Figuren beschrieben werden.

Von den Figuren zeigen
- Figur 1: eine perspektivische Darstellung einer Lichtschrankenmatrix zum Orten einer Zitze einer Kuh und
- Figur 2: eine schematische Darstellung der Lichtschrankenmatrix aus Figur 1 mit ausgeklappten Seitenflächen.

Die Lichtschrankenmatrix 10 umfaßt im wesentlichen mehrere Lichtschranken an einem Träger, der zwei seitliche Schenkel 12 und 14 mit nach innen gekröpften Enden 16 und 18 sowie einen die seitlichen Schenke 12 und 14 verbindenden Mittelschenkel 20 aufweist. Jede Lichtschranke wird jeweils von einer Lichtquelle und einem der Lichtquelle zugeordneten Lichtsensor gebildet.

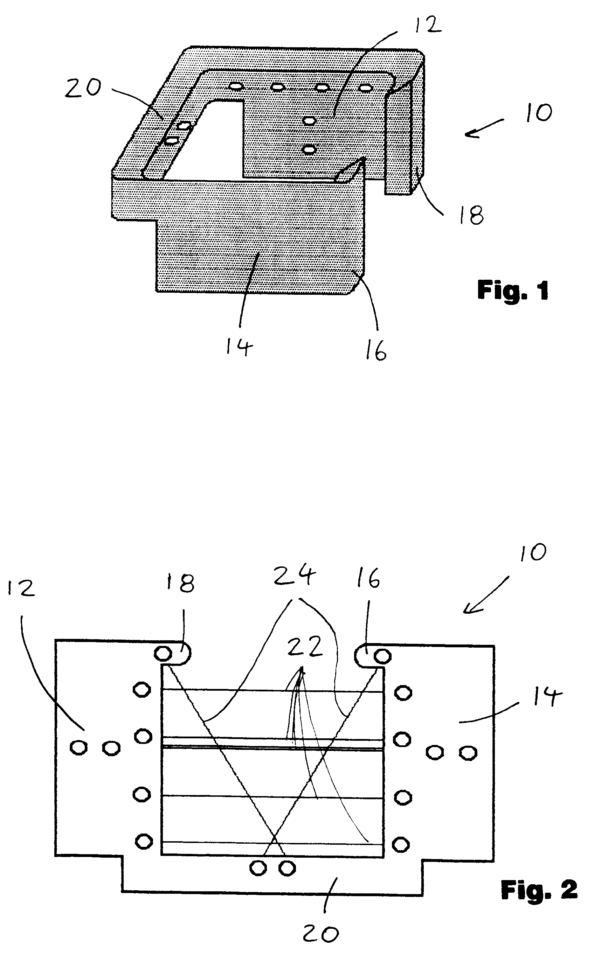

Die seitlichen Schenkel 12 und 14 tragen jeweils in der Nähe ihres in Figur 1 oberen Randes eine Reihe von vier Lichtquellen oder -sensoren welche so angeordnet sind, daß sie sich paarweise gegenüberliegen und vier Lichschranken bilden. Unterhalb der beiden Reihen von jeweils vier Lichtquellen und -sensoren befindet sich auf jedem der seitlichen Schenkel 12 und 14 je ein Paar von Lichtquellen bzw. -sensoren, die mit Bezug auf den oberen Rand der seitlichen Schenkel 12 und 14 in senkrechter Reihe angeordnet sind und zwei weitere Lichtschranken mit paarweise gegenüberliegenden Lichtquellen bzw. -sensoren bilden. Die sechs Paare von Lichtquellen und -sensoren auf den beiden seitlichen Schenkeln 12 und 14 bilden zusammen eine Matrix von sechs Lichtschranken mit zueinander parallelen Lichtstrahlen. Die parallelen Lichtstrahlen 22 sind in Figur 2 als Linien dargestellt.

Weiterhin weisen die abgekröpften Enden 16 und 18 der Schenke 12 und 14 an ihrem mit Bezug auf Figur 1 oberen Ende jeweils eine Lichtquelle bzw. -sensor auf. Diesen insgesamt zwei Lichtquellen oder -sensoren sind zwei auf gleicher Höhe in der Nähe der Mitte des Verbindungsschenkels 20 angebrachte Lichtquellen und -sensoren so zugeordnet, daß sich zwei Lichtschranken mit diagonalen, sich kreuzenden Lichtstrahlen ergeben. Auch die diagonalen Lichtstrahlen 24 sind in Figur 2 eingezeichnet.

Der Träger der Lichtschrankenmatrix ist am Ende eines nicht dargestellten Melkroboterarmes oberhalb eines Greifers für einen Zitzenbecher angeordnet. Wenn mit Hilfe des Melkroboters ein Zitzenbecher an eine Zitze einer Kuh angesetzt werden soll, hilft die Lichtschrankenmatrix, diese Zitze so genau zu orten, daß der Zitzenbecher der Zitze übergestülpt werden kann. Dazu wird der Greifer des Roboterarmes mit dem Zitzenbecher so nahe an eine Zitze herangeführt, daß die Zitze sich innerhalb des von den beiden seitlichen Schenkeln 12 mit ihren abgekröpften Enden 16 und 18 und dem Verbindungsschenkel 20 umgrenzten Gebietes befindet. Sobald dies der Fall ist, kann der Greifer mit Hilfe der acht Lichschranken so genau feinpositioniert werden, daß der Zitzenbecher angesetzt werden kann. Damit es aufgrund verschmutzer Lichtquellen oder -sensoren nicht zu Fehlpositionierungen kommt, wird das Ortungsergebnis während des Ortens regelmäßig einer Plausibilitätsprüfung unterzogen und gegebenenfalls ein Lichtschrankenreinigungsschritt durchgeführt.

## Patentansprüche

1. Verfahren zum Orten eines Objektes, insbesondere einer Zitze einer Kuh, innerhalb eines Arbeitsbereiches mittels einer Sensormatrix (10) eines Melkroboters, dadurch gekennzeichnet, daß das mit Hilfe der Sensormatrix (10) gewonnene Ortungsergebnis während des Ortens auf seine Plausibilität hin überprüft und im Falle eines nicht plausiblen Ortungsergbnisses ein separater Diagnoseschritt durchgeführt wird.

2. Verfahren nach Anspruch 1,
dadurch gekennzeichnet, daß der separate Diagnoseschritt an einem Ort abseits des Arbeitsbereiches durchgeführt wird.

3. Verfahren nach einem der Ansprüche 1 oder 2,
dadurch gekennzeichnet, daß im Falle eines nicht plausiblen Meß- oder Diagnoseergebnisses ein Sensorreinigungsschritt ausgelöst wird.

## Claims

1. A process for locating an object, in particular a teat of a cow, within a working region by means of a sensor matrix (10) of a milking robot, characterized in that the locating result obtained with the aid of the sensor matrix (10) is checked for its plausibility during locating and if the locating result is implausible a separate diagnostic step is carried out.

2. A process according to claim 1, characterized in that the separate diagnostic step is carried out at a position outside the working region.

3. A process according to one of Claims 1 or 2, characterized in that if the measuring or diagnostic result is implausible a sensor-cleaning step is triggered.

## Revendications

1. Procédé pour localiser un objet, en particulier un trayon d'une vache, à l'intérieur d'une zone de travail au moyen d'une matrice de capteur (10) d'un robot de traite, caractérisé en ce que le résultat de la localisation obtenu à l'aide de la matrice de capteur (10) est contrôlé pendant la localisation du point de vue de la vraisemblance et qu'une étape de diagnostic séparée est réalisée dans le cas d'un résultat de localisation non plausible.

2. Procédé selon la revendication 1, caractérisé en ce que l'étape de diagnostic séparé est effectuée en un endroit à l'écart de la zone de travail.

3. Procédé selon l'une quelconque des revendications 1 ou 2, caractérisé en ce qu'une étape de nettoyage du capteur est déclenchée dans le cas d'un résultat de mesure ou de diagnostic non plausible.
